# EUROPÄISCHE PATENTSCHRIFT

(11) **EP 2 861 439 B1**
(45) Veröffentlichungstag und Bekanntmachung des Hinweises auf die Patenterteilung: **13.07.2016**
(21) Anmeldenummer: 13725081.7
(22) Anmeldetag: 25.05.2013
(51) Int. Cl.: B60G 21/055, B60G 17/02

(54) **VERSTELLBARE RADAUFHÄNGUNG FÜR DIE RÄDER EINER ACHSE EINES KRAFTFAHRZEUGS**
ADJUSTABLE WHEEL SUSPENSION FOR THE WHEELS OF AN AXLE OF A MOTOR VEHICLE
SUSPENSION RÉGLABLE POUR LES ROUES D'UN ESSIEU D'UN VÉHICULE À MOTEUR

(30) Priorität: 15.06.2012 DE 102012011919
(43) Veröffentlichungstag der Anmeldung: 22.04.2015
(73) Patentinhaber: Audi AG, 85045 Ingolstadt (DE)
(72) Erfinder: SCHINDLER, Andreas, 85055 Ingolstadt (DE); BERINGER, Heinrich, 85095 Denkendorf (DE); GOLDBERG, Ruben, 85049 Ingolstadt (DE); SCHMITT, Joachim, 85051 Ingolstadt (DE); ISAKIEWITSCH, Christian, 85051 Ingolstadt (DE)
(74) Vertreter: Reichert, Thomas Klaus
(86) Internationale Anmeldenummer: PCT/EP2013/001548
(87) Internationale Veröffentlichungsnummer: WO 2013/185883

(56) Entgegenhaltungen:
- EP-A1- 0 779 204
- EP-A1- 2 517 905
- EP-A2- 1 321 351
- DE-A1-102006 001 709
- DE-A1-102007 024 770
- DE-A1-102009 005 895

## Beschreibung

Die Erfindung betrifft eine verstellbare Radaufhängung für die Räder einer Achse eines Kraftfahrzeugs gemäß der im Oberbegriff des Patentanspruches 1 angegebenen Art.

Sogenannte aktive Systeme zur Aufbauberuhigung eines Kraftfahrzeugs sind hinreichend bekannt. In der Regel werden hierzu Stellvorrichtungen zur Verdrehung eines Drehstabes verwendet. Durch das Aufbringen eines Moments auf den Drehstab werden aktive Kräfte gestellt, die die Wankbewegung oder die Aufbaubewegung des Kraftfahrzeugs beeinflussen können.

So offenbaren z.B. die DE 101 26 928 A1, DE 10 2004 002 550 A1 oder die DE 102 42 552 B4 entsprechende Anordnungen von zweigeteilten Stabilisatoren mit einer Stellvorrichtung zum Beeinflussen der Federraten und der Fahreigenschaften von Kraftfahrzeugen. Dabei kann durch gegensinniges Verstellen der geteilten Drehstäbe des insgesamt u-förmigen Stabilisators das Wankverhalten bzw. die Kurvenneigung des Kraftfahrzeugs verringert oder durch gleichsinniges Verstellen der Nickbewegung z. B. beim Bremsen entgegen gewirkt werden.

Eine gattungsgemäße verstellbare Radaufhängung für die Räder eines Kraftfahrzeugs ist in der DE 10 2009 005 898 A1 beschrieben. Hierbei ist jedes Rad der Achse über mehrere Radführungselemente an einem Hilfsrahmen gelagert und steht über seine Radführungselemente mit einem verstellbaren Drehstab in Wirkverbindung. Jedem Drehstab ist eine Stellvorrichtung zugeordnet, über den Momente auf den Drehstab aufbringbar sind, d.h. aktive Kräfte gestellt werden können, um z.B. einer Wankbewegung entgegen zu wirken. Zudem sind entsprechende Steuergeräte vorgesehen, zur Regel- bzw. Steuerung der Stellvorrichtung. Die Komponenten Steuergerät, Stellvorrichtung sowie Drehstab sind jeweils am Hilfsrahmen befestigt. Als nachteilig erweist sich hierbei, dass die Komponenten einen großen Bauraumbedarf benötigen. Ein weiterer Nachteil ist, dass aufgrund der unmittelbaren Befestigung der Komponenten Steuergerät, Stellvorrichtungen und Drehstäbe am Hilfsrahmen dieser im Bereich der Befestigungsstelle entsprechend verstärkt und damit massiver auszubilden ist, um eine Aufnahme der wirkenden Kräfte und Momente zu gewährleisten.

Eine weitere, sämtliche Merkmale des Oberbegriffs des Patentanspruches 1 aufweisende verstellbare Radaufhängung für die Räder eines Kraftfahrzeugs ist in der DE 10 2009 005 895 A1 offenbart. Eine Integration von Steuergerät und Stellvorrichtung in ein gemeinsames Gehäuse geht aus der DE 10 2009 028 386 A1 hervor.

Der Erfindung liegt die Aufgabe zugrunde, eine Verstellbare Radaufhängung für die Räder einer Achse eines Kraftfahrzeugs gemäß der im Oberbegriff des Patentanspruches 1 angegebenen Art derart weiterzubilden, dass eine bauraumsparende Anordnung der Komponenten Steuergerät, Stellvorrichtungen und Drehstäbe am Hilfsrahmen gewährleistet ist und zudem eine gewichtsreduzierte Ausgestaltung des Hilfsrahmens sichergestellt ist.

Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen der Erfindung.

In bekannter Art und Weise ist jedes Rad der verstellbaren Radaufhängung über mehrere Radführungselemente geführt und jedes Rad der Achse steht über seine Radführungselemente mit einem verstellbaren Drehstab in Wirkverbindung. Hierbei sind die den jeweiligen Rädern zugeordneten Drehstäbe bereichsweise fluchtend zueinander angeordnet und in Fahrzeugquerrichtung ausgerichtet. Zur Verstellung ist jedem Drehstab jeweils eine über ein Steuergerät regel- und/oder steuerbare Stellvorrichtung zugeordnet. Zudem sind in bekannter Art und Weise die einzelnen Komponenten an einem karosseriefesten Hilfsrahmen gelagert, d.h. neben dem Steuergerät sind auch die Drehstäbe über ihre zugeordneten Stellvorrichtungen unmittelbar an dem karosseriefesten Hilfsrahmen befestigt. Zudem sind die Drehstäbe und das Steuergerät in einem gemeinsamen Gehäuse angeordnet, welches als integrales Bauteil am Hilfsrahmen z.B. mittels einer Schraubverbindung, befestigt ist.

Die Integration der Komponenten Drehstäbe und Steuergerät in einem gemeinsamen Gehäuse erweist sich als besonders vorteilhaft, da nunmehr eine bauraumsparende und leicht zu montierende Anordnung zur Verfügung gestellt ist. Zudem erweist sich die Integration der Bauteile in ein gemeinsames Gehäuse von Vorteil, da durch das Gehäuse wirkenden Kräfte und Momente mit aufgenommen werden und somit eine unmittelbare Einleitung in den Hilfsrahmen nicht mehr erfolgt. Dies hat den positiven Effekt, dass über die Befestigungspunkte Gehäuse - Hilfsrahmen geringere Kräfte und Momente zu übertragen sind, mit der Folge, dass der Hilfsrahmen leichter und damit kostengünstiger herstellbar ist.

Erfindungsgemäß ist das in Fahrzeugquerrichtung ausgerichtete Gehäuse derart ausgebildet und dimensioniert, dass der Hilfsrahmen unter Wegfall einer Querstrebe ausbildbar ist. Durch die erfindungsgemäße Ausgestaltung und Dimensionierung des gemeinsamen Gehäuses ist nun sichergestellt, dass das Gehäuse zusätzlich die Funktion einer Hilfsrahmenquerstrebe übernimmt. Durch diese erfindungsgemäße Funktionsintegration in eine querverbindende Gehäusestrebe kann somit auf die übliche vordere Querstrebe verzichtet werden, und die Hilfsrahmenkonstruktion kann besonders leicht ausgeführt werden. Ein weiterer Vorteil ist, dass durch die querstützende Wirkung der Gehäusestrebe auf jeweils einen Anbindungspunkt gegenüber der sonst üblichen 3-Punktelagerung bei nichtintegrierter Stelleranordnung verzichtet werden kann.

Vorzugsweise ist das Gehäuse als ein geschlossenes Profil, z.B. einen Kreis-, Rechteck-, oder Dreiecksquerschnitt aufweisend, ausgebildet. Diese Ausgestaltung des Gehäuses erweist sich als besonders vorteilhaft, da diese Bauform hohe Steifigkeiten, insbesondere Biegesteifigkeiten, bei geringem Materialeinsatz ermöglicht. Kräfte aus dem Stellvorgang werden so ohne größere Hebelwirkungen direkt in die Struktur abgeleitet. Zudem übernimmt das als geschlossenes Profil ausgebildete Gehäuse Schutzfunktionen für Stellvorrichtung mit Drehstäben und Steuergerät.

Gemäß einer weiteren besonders vorteilhaften Ausbildung der Erfindung sind am Gehäuse mehrere, jeweils eine horizontal ausgerichtete Bohrung aufweisende Anformungen ausgebildet. Entsprechend ist der Hilfsrahmen mit hierzu korrespondierend horizontal ausgerichteten Bohrungen versehen, so dass das Gehäuse über eine horizontal ausgerichtete Verschraubung am Hilfsrahmen befestigbar ist. Die horizontale Verschraubung erweist sich im Hinblick auf den geringeren Bauraumbedarf als besonders vorteilhaft.

Weitere Vorteile, Merkmale und Anwendungsmöglichkeiten der vorliegenden Erfindung ergeben sich aus der nachfolgenden Beschreibung in Verbindung mit dem in den Zeichnungen dargestellten Ausführungsbeispiel.

In der Beschreibung, in den Ansprüchen und in der Zeichnung werden die in der unten aufgeführten Liste der Bezugzeichen verwendeten Begriffe und zugeordneten Bezugszeichen verwendet.

In der Zeichnung bedeutet:
- Fig. 1: eine verstellbare Radaufhängung für die Räder einer Achse eines Kraftfahrzeugs gemäß dem Stand der Technik, und
- Fig. 2: eine erfindungsgemäß ausgebildete verstellbare Radaufhängung.

In der nachfolgenden Beschreibung und in den Figuren werden zur Vermeidung von Wiederholungen gleiche Bauteile und Komponenten mit gleichen Bezugszeichen gekennzeichnet, sofern keine weitere Differenzierung erforderlich oder sinnvoll ist.

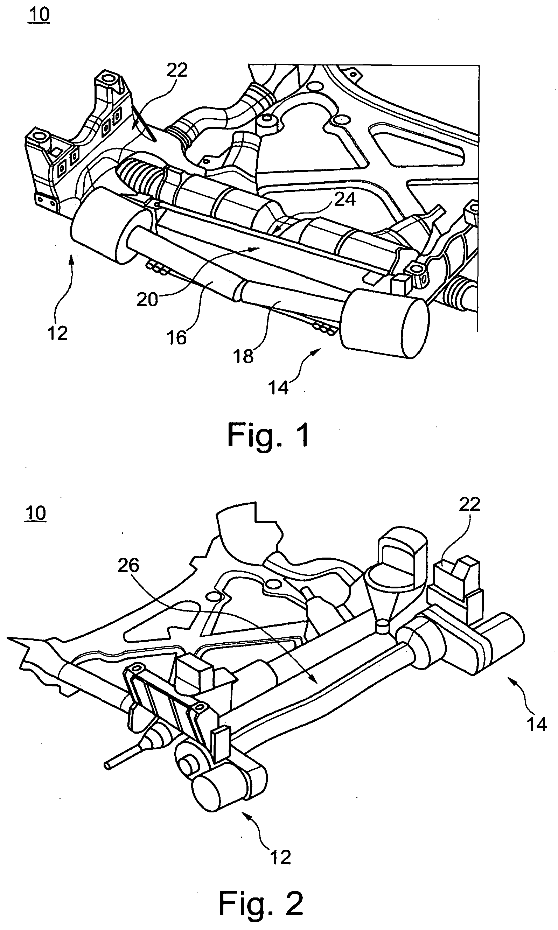

Fig. 1 zeigt eine insgesamt mit dem Bezugszeichen 10 bezeichnete verstellbare Radaufhängung für die Räder einer Achse eines Kraftfahrzeugs. Die Räder sind vorliegend aus Gründen der Übersichtlichkeit nicht dargestellt.

Wie Fig. 1 zu entnehmen ist, ist jeder Achsseite ein über eine Stellvorrichtung 12, 14 verstellbarer Drehstab 16, 18 zugeordnet. Die beiden Drehstäbe 16, 18 sind bereichsweise fluchtend zueinander angeordnet. Über die Stellvorrichtung 12 bzw. 14 werden die für die für die Verstellung der Drehstäbe 16, 18 notwendigen Kräfte und Momente gestellt.

Zudem ist ein Steuergerät 20 vorgesehen, über das eine elektronische Regelung/Steuerung der Stellvorrichtung 12, 14 erfolgt.

Wie Fig. 1 weiter zu entnehmen ist, sind die Drehstäbe 16, 18 über ihre zugeordnete Stellvorrichtung 12 ,14 an einem Hilfsrahmen 22 befestigt. Zudem ist auch das Steuergerät 20 am Hilfsrahmen 22 gelagert.

Zur Gewährleistung einer ausreichenden Stabilität, weist der Hilfsrahmen 22 eine Querstrebe 24 auf.

Wie Fig. 1 zu entnehmen ist, benötigt die gewählte Anordnung der Komponenten Stellvorrichtung 12, 14, Drehstäbe 16, 18 sowie Steuergerät 20 am Hilfsrahmen 22 verhältnismäßig viel Bauraum. Zudem ist der Hilfsrahmen 22 verstärkt auszubilden, um eine Aufnahme der entstehenden Kräfte und Momente zu gewährleisten.

### Hier setzt nun die Erfindung ein:

Wie Fig. 2 zu entnehmen ist, sind die Komponenten Stellvorrichtung 12, 14, zugeordnete Drehstäbe 16, 18 sowie Steuergerät 20 in einem gemeinsamen Gehäuse 26 integriert, das als integrales Bauteil am Hilfsrahmen 22 befestigt ist. Das Gehäuse 26 ist dabei in Fahrzeugquerrichtung FQ ausgerichtet vor dem Hilfsrahmen 22 liegend angeordnet.

Die Integration in ein gemeinsames Gehäuse 26 bewirkt eine bauraumsparende Anordnung und erleichtert die Montage der einzelnen Komponenten. Da mittels des Gehäuses 26 auch wirkende Kräfte und Momente aufgenommen werden, sind die an der Befestigungsstelle zwischen Gehäuse 26 und Hilfsrahmen 22 wirkenden Kräfte und Momente stark reduziert, so dass die aus dem Stand der Technik notwendige Verstärkung des Hilfsrahmens 22 nicht mehr erforderlich ist.

Aufgrund der Ausrichtung des Gehäuses 26 in Fahrzeugquerrichtung FQ und der entsprechenden Dimensionierung und Ausgestaltung des Gehäuses 26 ist zudem sichergestellt, dass das Gehäuse 26 die Funktion der Querstrebe 24 des Hilfsrahmens 22 übernimmt. D.h., der Hilfsrahmen 22 kann - wie in Fig. 2 gezeigt - ohne vordere Querstrebe ausgebildet werden.

### Bezugszeichenliste

- 10: Radaufhängung
- 12: Stellvorrichtung
- 14: Stellvorrichtung
- 16: Drehstab
- 18: Drehstab
- 20: Steuergerät
- 22: Hilfsrahmen
- 24: Querstrebe des Hilfsrahmens
- 26: Gehäuse

- FQ: Fahrzeugquerrichtung

## Patentansprüche

1. Verstellbare Radaufhängung (10) für die Räder einer Achse eines Kraftfahrzeugs, bei der jedes Rad über Radführungselemente geführt ist und jedes Rad über seine Radführungselemente mit einem verstellbaren Drehstab (16, 18) in Wirkverbindung steht, wobei die den jeweiligen Rädern zugeordneten Drehstäbe (16, 18) bereichsweise fluchtend zueinander angeordnet und in Fahrzeugquerrichtung (FQ) ausgerichtet sind und jedem Drehstab (16, 18) zur Verstellung jeweils eine über ein Steuergerät (20) regelund/oder steuerbare Stellvorrichtung (12, 14) zugeordnet ist und wobei an einem Hilfsrahmen (22) die Drehstäbe (16, 18) jeweils über ihre Stellvorrichtung (12, 14) sowie das Steuergerät (20) gelagert sind, wobei die Stellvorrichtungen (12, 14) und die Drehstäbe (16, 18) in einem gemeinsamen Gehäuse (26) angeordnet sind, welches als integrales Bauteil am Hilfsrahmen (22) befestigbar ist, **dadurch gekennzeichnet, dass** das gemeinsame Gehäuse (26) derart ausgebildet und dimensioniert ist, dass der Hilfsrahmen (22) unter Wegfall einer Querstrebe ausbildbar ist.

2. Verstellbare Radaufhängung (10) nach Patentanspruch 1, **dadurch gekennzeichnet, dass** das Gehäuse (22) als ein geschlossenes Profil ausgebildet ist.

3. Verstellbare Radaufhängung (10) nach Patentanspruch **1, dadurch gekennzeichnet, dass** das geschlossene Profil einen Kreis-, Rechteckoder Dreiecksquerschnitt aufweist.

4. Verstellbare Radaufhängung (10) nach einem der vorangegangenen Patentansprüche, **dadurch gekennzeichnet, dass** am Gehäuse (26) mehrere, jeweils eine horizontal ausrichtete Bohrung aufweisende Anformungen ausgebildet sind, und der Hilfsrahmen (22) hierzu korrespondierend horizontal ausgerichtete Bohrungen aufweist und das Gehäuse (26) über eine horizontal ausgerichtete Verschraubung am Hilfsrahmen (22) befestigt ist.

## Claims

1. Adjustable wheel suspension (10) for the wheels of an axle of a motor vehicle, in which each wheel is guided via wheel guiding elements and each wheel is operatively connected via its wheel guiding elements to an adjustable torsion bar (16, 18), wherein the torsion bars (16, 18) assigned to the respective wheels are arranged in alignment with one another in some regions and are oriented in the vehicle transverse direction (FQ) and for adjustment purposes each torsion bar (16, 18) is assigned a respective adjusting device (12, 14) which can be adjusted and/or controlled via a control device (20), and wherein the torsion bars (16, 18) are each mounted on an auxiliary frame (22) via their adjusting device (12, 14) and the control device (20), wherein the adjusting devices (12, 14) and the torsion bars (16, 18) are arranged in a common housing (26) which can be fastened as an integral component on the auxiliary frame (22), **characterised in that** the common housing (26) is designed and dimensioned in such a way that the auxiliary frame (22) can be formed without a transverse strut.

2. Adjustable wheel suspension (10) according to claim 1, **characterised in that** the housing (22) is configured as a closed profile.

3. Adjustable wheel suspension (10) according to claim 1, **characterised in that** the closed profile has a circular, rectangular or triangular cross-section.

4. Adjustable wheel suspension (10) according to any one of the preceding claims, **characterised in that** multiple mouldings are formed on the housing (26), each having a horizontally oriented bore, and the auxiliary frame (22) has horizontally oriented bores corresponding thereto, and the housing (26) is fastened to the auxiliary frame (22) via a horizontally oriented screw connection.

## Revendications

1. Suspension de roue réglable (10) pour les roues d'un essieu d'un véhicule automobile, chaque roue étant guidée par des éléments de guidage de roue et chaque roue étant en liaison active avec une barre de torsion réglable (16, 18) par l'intermédiaire de ses éléments de guidage de roue, les barres de torsion (16, 18) associées aux roues respectives étant agencées alignées par endroits les unes par rapport aux autres et orientées dans la direction transversale de véhicule (FQ), un dispositif de réglage (12, 14) réglable et/ou commandable par l'intermédiaire d'un appareil de commande (20) étant associé à chaque barre de torsion (16, 18) en vue du réglage et les barres de torsion (16, 18), à chaque fois par l'intermédiaire de leur dispositif de réglage (12, 14), ainsi que l'appareil de commande (20) étant logés sur un faux-châssis (22), les dispositifs de réglage (12, 14) et les barres de torsion (16, 18) étant agencés dans un carter commun (26) qui peut être fixé comme pièce intégrée au faux-châssis (22), **caractérisée en ce que** le carter commun (26) est conçu et dimensionné de telle sorte que le faux-châssis (22) peut être conçu en supprimant une entretoise.

2. Suspension de roue réglable (10) selon la revendication 1, **caractérisée en ce que** le carter (22) est conçu comme un profilé fermé.

3. Suspension de roue réglable (10) selon la revendication 1, **caractérisée en ce que** le profilé fermé a une section transversale en forme de cercle, de rectangle ou de triangle.

4. Suspension de roue réglable (10) selon l'une des revendications précédentes, **caractérisée en ce que** plusieurs appendices comportant à chaque fois un trou orienté horizontalement sont conçus sur le carter (26), **en ce que** le faux-châssis (22) comporte des trous orientés horizontalement et correspondant aux précédents et **en ce que** le carter (26) est fixé au faux-châssis (22) par l'intermédiaire d'un vissage orienté horizontalement.
